# EUROPÄISCHE PATENTSCHRIFT

(11) **EP 3 145 743 B1**
(45) Veröffentlichungstag und Bekanntmachung des Hinweises auf die Patenterteilung: **14.03.2018**
(21) Anmeldenummer: 15722934.5
(22) Anmeldetag: 15.05.2015
(51) Int. Cl.: B60K 15/035, F16K 17/36, F02D 33/00

(54) **KRAFTSTOFFANLAGE FÜR EIN KRAFTFAHRZEUG MIT EINRICHTUNGEN ZUR ENTLEERUNG EINER FLÜSSIGKEITSFALLE EINER TANKENTLÜFTUNGSEINRICHTUNG BEI EINER SCHRÄGABSTELLUNG**
FUEL SYSTEM FOR A MOTOR VEHICLE WITH DEVICES FOR EMPTYING A LIQUID TRAP OF A TANK-VENTING DEVICE IN THE EVENT OF PARKING ON A SLOPE
SYSTÈME D'ALIMENTATION EN CARBURANT POUR VÉHICULE AUTOMOBILE COMPRENANT DES DISPOSITIFS SERVANT À VIDER UN PIÈGE À LIQUIDE D'UN DISPOSITIF DE VENTILATION DE RÉSERVOIR DANS LE CAS D'UN STATIONNEMENT EN PENTE

(30) Priorität: 23.05.2014 DE 102014007648
(43) Veröffentlichungstag der Anmeldung: 29.03.2017
(73) Patentinhaber: Audi AG, 85045 Ingolstadt (DE)
(72) Erfinder: HAGEN, Harald, 95473 Creussem (DE)
(74) Vertreter: Askaryar, Jama
(86) Internationale Anmeldenummer: PCT/EP2015/001003
(87) Internationale Veröffentlichungsnummer: WO 2015/176809

(56) Entgegenhaltungen:
- DE-A1- 10 052 399
- DE-A1- 10 060 239
- DE-A1-102005 031 430
- US-A1- 2013 160 877

## Beschreibung

Die Erfindung betrifft eine Kraftstoffanlage für ein Kraftfahrzeug, mit einem Kraftstofftank, einer Einrichtung zum Erfassen des Füllstandes des flüssigen Kraftstoffs im Kraftstofftank und einer Tankentlüftungseinrichtung, die mindestens ein Tankentlüftungsventil, eine innerhalb des Kraftstofftanks angeordnete und mit dem Entlüftungsventil verbundene Flüssigkeitsfalle zur Abscheidung von flüssigem Kraftstoff sowie eine Pumpe zum Entleeren der Flüssigkeitsfalle umfasst.

Kraftstofftanks von Kraftfahrzeugen sind normalerweise mit einer Einrichtung zum Erfassen des Füllstandes des flüssigen Kraftstoffs im Kraftstofftank ausgestattet, die mit einer Kraftstofffüllstandsanzeige auf der Instrumententafel des Kraftfahrzeugs verbunden ist.

Darüber hinaus sind druckdicht verschlossene Kraftstofftanks moderner Kraftfahrzeuge mit einer Tankentlüftungseinrichtung ausgestattet. Diese verhindert zum einen, dass sich bei einem größeren Anstieg der Umgebungstemperaturen aufgrund der dadurch hervorgerufenen Verdunstung von Kraftstoff im Inneren des Kraftstofftanks ein unerwünschter Überdruck aufbauen kann und gestattet zum anderen beim Betanken des Kraftfahrzeugs ein Entweichen des vom Kraftstoff verdrängten Gasgemischs aus dem Gas- oder Kopfraum des Kraftstofftanks.

Die Tankentlüftungseinrichtung umfasst gewöhnlich mehrere, im Kopf- oder Gasraum verteilte Tankentlüftungsventile, eine mit den Tankentlüftungsventilen verbundene, innerhalb des Tanks angeordnete Flüssigkeitsfalle, ein mit der Flüssigkeitsfalle verbundenes Tankabsperrventil und einen Aktivkohlefilter, der außerhalb des Tanks zwischen dem Tankabsperrventil und der Umgebung angeordnet ist. Das Tankabsperrventil ist normalerweise geschlossen und wird während des Betankens des Kraftstofftanks geöffnet, um das vom Kraftstoff verdrängte Gasgemisch aus dem Gas- oder Kopfraum des Kraftstofftanks in den Aktivkohlefilter zuzuführen, der einen unerwünschten Austritt von Kohlenwasserstoffen in die Umgebung verhindert.

Da das bei der Entlüftung von Kraftstofftanks aus dem Gas- oder Kopfraum verdrängte Gasgemisch jedoch nicht nur flüchtige sondern auch flüssige Kohlenwasserstoff-Bestandteile in Form von kleinen Tröpfchen enthält, die den Aktivkohlefilter schädigen können, umfasst die Tankentlüftungseinrichtung einen Flüssigkeitsabscheider, in dem flüssige Kohlenwasserstoffe vor dem Austritt des Gasgemischs aus diesem abgeschieden werden. Dieser Flüssigkeitsabscheider wird im Rahmen der vorliegenden Patentanmeldung als Flüssigkeitsfalle (liquid trap) oder Syphon bezeichnet und befindet sich innerhalb des Kraftstofftanks, wobei er hinter den Tankentlüftungsventilen und vor dem Tankabsperrventil angeordnet ist. Die Entleerung der Flüssigkeitsfalle erfolgt gewöhnlich mittels einer Pumpe, die zumeist als Saugstrahlpumpe ausgebildet und ebenfalls innerhalb des Kraftstofftanks angeordnet ist. Da diese Pumpe zusammen mit der Kraftstoffpumpe vom Verbrennungsmotor des Kraftfahrzeugs angetrieben wird, wird die Flüssigkeitsfalle im Stillstand des Kraftfahrzeugs nicht entleert.

Im Betrieb von Kraftfahrzeugen mit einem solchen Kraftstofftank hat sich jedoch gezeigt, dass nach einem längeren Abstellen des Kraftfahrzeugs mit einer größeren Neigung oder Schräglage ein Betanken des Fahrzeugs auch nach der Beseitigung der Schräglage nicht möglich ist. Als Ursache wurde festgestellt, dass sich die Flüssigkeitsfalle in der Schräglage mit Kraftstoff gefüllt hat, der vor einer Entleerung der Flüssigkeitsfalle verhindert, dass Kraftstoffdämpfe aus den Tankentlüftungsventilen zum Tankabsperrventil strömen können.

Dies ist insbesondere dann von Nachteil, wenn das Fahrzeug unmittelbar nach dem Stillstand betankt werden soll, oder wenn es sich um ein Hybridfahrzeug handelt, das anschließend bis zum Betanken nur im Elektrobetrieb gefahren werden soll.

Aus dem Stand der Technik ist die gattungsbildende Druckschrift DE 100 60 239 A1 bekannt. Diese betrifft eine Vorrichtung zum Be- und Entlüften eines Kraftstoffbehälters in einem Kraftfahrzeug, mit zumindest einer von Kraftstoffbehälter zu einem Aktivkohlefilter führenden Entlüftungsleitung, die mit einem flüssigen Kraftstoff zurückhaltenen Ausgleichsbehälter kommuniziert, wobei zur Erhöhung der Funktionssicherheit bei definierten Betriebszuständen eine elektrisch zuschaltbare Pumpe vorgesehen ist, die bei diesen Betriebszuständen sporadisch einschaltbar ist und gegebenenfalls im Ausgleichsbehälter angesammelten Kraftstoff in den Kraftstoffbehälter zurückfördert.

Weiterhin zeigt der Stand der Technik die Druckschrift DE 100 52 399 A1. Diese beschreibt einen Kraftstoffbehälter für ein Kraftfahrzeug mit einem integrierten Druck-Ausgleichsbehälter sowie mit Entlüftungsventilen, die, in Fahrzeug-Fahrtrichtung betrachtet, linksseitig und rechtsseitig im Kraftstoffbehälter angeordnet sind und im Ausgleichsbehälter münden. Der flach bauende Ausgleichsbehälter erstreckt sich nahezu über die gesamte Breite des Kraftstoffbehälters. Bevorzugt erstrecken sich die im Ausgleichsbehälter mündenden Leitungen innerhalb desselben von den Entlüftungsventilen nahezu bis zur dem jeweiligen Entlüftungsventil gegenüberliegenden Seite des Ausgleichsbehälters. Der Ausgleichsbehälter kann mit einer Vertiefung versehen sein, aus der sich dort ansammelnde Flüssigkeit mittels einer Pumpe abziehbar ist.

Ausgehend hiervon liegt der Erfindung die Aufgabe zugrunde, eine Kraftstoffanlage der eingangs genannten Art dahingehend zu verbessern, dass auch nach einem längeren Abstellen des Kraftfahrzeugs in Schräglage ein Betanken des Fahrzeugs möglich ist, ohne den Energieverbrauch des Fahrzeugs im Stillstand merklich zu vergrößern.

Diese Aufgabe wird erfindungsgemäß durch Einrichtungen zur Erfassung des Neigungswinkels des Kraftstofftanks sowie Einrichtungen zum Aktivieren der Pumpe in Abhängigkeit vom Füllstand des flüssigen Kraftstoffs im Kraftstofftank und vom Neigungswinkel des Kraftstofftanks gelöst. Dabei ist vorgesehen, dass die Einrichtungen einen Hebelgeber umfassen, der einen schwenkbaren Hebelarm und einen am freien Ende des Hebelarms angebrachten Schwimmer umfasst und den Neigungswinkel des Hebelarms in Bezug zu einer am Boden des Kraftstofftanks angebrachten Halterung erfasst, wobei der Querneigungswinkel aus dem von dem Hebelgeber erfassten Neigungswinkel des Hebelarms und dem von einer Füllstandserfassungseinrichtung erfassten Füllstand im Kraftstofftank berechnet wird.

Der Erfindung liegt die Erkenntnis zugrunde, dass das zuvor genannte Problem einer Befüllung der Flüssigkeitsfalle mit Kraftstoff bei schräg abgestelltem Fahrzeug dadurch verursacht wird, dass eines oder mehrere der innerhalb des Kraftstofftanks angeordneten und mit der Flüssigkeitsfalle verbundenen Tankentlüftungsventile bei einer größeren Neigung des Fahrzeugs und/oder bei einem hohen Füllstand im Tank in den Kraftstoff eintauchen können. Da die Tankentlüftungsventile für ein Eintauchen in Kraftstoff nicht ausgelegt sind, kann durch kleinere Undichtigkeiten Kraftstoff in Tankentlüftungsventile eindringen. Sofern sich eines der in den Kraftstoff eintauchenden undichten Tankentlüftungsventile auf einem höheren Niveau als die Flüssigkeitsfalle befindet, strömt dieser Kraftstoff zur Flüssigkeitsfalle und füllt diese allmählich vollständig.

Mit den erfindungsgemäßen Einrichtungen sowie mit einem elektrischen Pumpenantrieb ist es jederzeit möglich, die Pumpe zum Entleeren der Flüssigkeitsfalle zu aktivieren, wenn ein oder mehrere Tankentlüftungsventile infolge einer größeren Neigung des Fahrzeugs und/oder eines hohen Füllstandes im Tank in den Kraftstoff eintauchen und sich infolgedessen die Flüssigkeitsfalle mit Kraftstoff füllt. Die erfindungsgemäßen Einrichtungen gestatten es daher, die Pumpe auch im Stillstand des Kraftfahrzeugs zu aktivieren, was dessen Betankung auch noch nach einer längeren Stillstandsphase mit größerem Neigungswinkel und/oder höherem Füllstand im Kraftstofftank möglich macht. Außerdem kann durch die Entleerung der Flüssigkeitsfalle verhindert werden, dass bei einem Temperaturanstieg der Druck des Gasgemischs im Gas- oder Kopfraum übermäßig ansteigt, weil das Gasgemisch wegen der gefüllten Flüssigkeitsfalle nicht mehr durch diese hindurch entweichen kann, und dass infolge des erhöhten Drucks des Gasgemischs flüssiger Kraftstoff aus der Flüssigkeitsfalle bis in den Aktivkohlefilter gedrückt wird.

Die erfindungsgemäßen Einrichtungen zum Aktivieren der Pumpe in Abhängigkeit vom Füllstand des flüssigen Kraftstoffs im Kraftstofftank und vom Neigungswinkel des Kraftstofftanks gestatten es darüber hinaus, die Pumpe bei abgestelltem Verbrennungsmotor nur dann zu aktivieren, wenn wegen eines hohen Füllstands des Kraftstoffs im Kraftstofftank und einer stärkeren Neigung des abgestellten Kraftfahrzeugs die Möglichkeit besteht, dass sich die Flüssigkeitsfalle mit Kraftstoff gefüllt hat. Im Vergleich zu einer vorsorglichen Aktivierung der Pumpe ungeachtet des jeweiligen Füllstands im Kraftstofftank bzw. der Neigung des abgestellten Kraftfahrzeugs kann dadurch der Energieverbrauch des abgestellten Fahrzeugs nicht unerheblich reduziert werden, weil die Pumpe sehr viel seltener in Betrieb genommen wird.

Je nachdem, wo das mindestens eine Tankentlüftungsventil im Kraftstofftank angeordnet ist, werden die Einrichtungen zur Erfassung des Neigungswinkels des Kraftstofftanks den Querneigungswinkel und/oder nicht erfindungsgemäß einen Längsneigungswinkel des Kraftstofftanks erfassen. Dort, wo der Kraftstofftank zwei beiderseits eines Mitteltünnels angeordnete und oberhalb des Mitteltunnels miteinander verbundene Hälften umfasst, in denen jeweils mindestens ein Tankentlüftungsventil angeordnet ist, wird zweckmäßig der Querneigungswinkel des Kraftstofftanks erfasst, da in diesem Fall bei einer stärkeren Querneigung des abgestellten Kraftfahrzeugs und einem hohen Füllstand im Kraftstofftank das Tankentlüftungsventil in einer der beiden Hälften in den flüssigen Kraftstoff eintauchen kann.

Dort, wo das Kraftfahrzeug mit einem Sensor ausgestattet ist, mit dem der Rollwinkel und/oder der Nickwinkel des Kraftfahrzeug im Fahrbetrieb zur Erhöhung der Fahrstabilität bei Kurvenfahrten oder Schleuderzuständen erfasst wird, kann dieser Sensor nicht erfindungsgemäß auch bei abgestelltem Kraftfahrzeug benutzt werden, um den Querneigungswinkel und/oder Längsneigungswinkel des Kraftstofftanks zu erfassen, von denen der erstere in der Regel dem Rollwinkel des Kraftfahrzeugs und der letztere in der Regel dem Nickwinkel des Kraftfahrzeugs entsprechen wird.

Alternativ können die Einrichtungen zur Erfassung des Neigungswinkels des Kraftstofftanks nicht erfindungsgemäß einen außerhalb oder vorzugsweise innerhalb des Kraftstofftanks angeordneten Geber mit einem Geberglied umfassen, das seine Ausrichtung in Abhängigkeit vom Neigungswinkel des Kraftstofftanks verändert.

Nicht zuletzt kann auch die Einrichtung zur Erfassung des Füllstands des Kraftstoffs im Kraftstofftank zum Erfassen des Neigungswinkels des Kraftstofftanks nicht erfindungsgemäß genutzt werden, indem im Kraftstofftank zwei oder mehr Füllstandsmesser im Abstand voneinander angeordnet werden und aus den Differenzen der von den einzelnen Füllstandsmessern ermittelten Füllstände der Neigungswinkel des Kraftstofftanks berechnet wird. Hierzu eignen sich besonders kapazitive Füllstandsmesser oder Füllstandsmesser in Form von Drucksensoren am Boden des Kraftstofftanks.

Vorzugsweise werden der Füllstand im Kraftstofftank und der Neigungswinkel des Kraftstofftanks während des Betriebs des Kraftfahrzeugs in kürzeren periodischen Zeitabständen erfasst und jeweils der zuletzt erfasste Wert gespeichert. Beim Abstellen des Kraftfahrzeugs werden die zuletzt gespeicherten Werte ausgewertet, um aus diesen aktuellen Füllstands- und Querneigungsbedingungen eine maximale Füllmenge der Flüssigkeitsfalle zu berechnen.

Gemäß einer weiteren bevorzugten Ausgestaltung der Erfindung wird die Pumpe von den Einrichtungen zur Aktivierung der Pumpe aktiviert, wenn bei abgestelltem Kraftfahrzeug sowohl der Füllstand des flüssigen Kraftstoffs im Kraftstofftank und der Neigungswinkel des Kraftstofftanks ein kritisches Maß übersteigt, das heißt wenn die zuvor berechnete maximale Füllmenge der Flüssigkeitsfalle über einem vorbestimmten Schwellenwert liegt, bei dem eine Betankung des Fahrzeugs nicht mehr sichergestellt ist.

Wenn die berechnete maximale Füllmenge der Flüssigkeitsfalle unterhalb des vorbestimmten Schwellenwerts liegt, der ein Betanken des Kraftfahrzeugs zulässt, besteht kein Bedarf, die Flüssigkeitsfalle vor einer erneuten Inbetriebnahme des Verbrennungsmotors zu entleeren und zu diesem Zweck die Pumpe zu aktivieren. Wenn hingegen die berechnete maximale Füllmenge der Flüssigkeitsfalle oberhalb des vorbestimmten Schwellenwerts liegt, bei dem eine Betankung des Fahrzeugs nicht mehr sichergestellt ist, kann die Pumpe bereits im Stillstand des Kraftfahrzeugs oder beim Einschalten der Zündung aktiviert werden, um die Flüssigkeitsfalle zu entleeren.

Eine weitere vorteilhafte Ausgestaltung der Erfindung sieht vor, vorab festzustellen, wie lange die Pumpe zur Entleerung der Flüssigkeitsfalle benötigt, und bei einer Aktivierung der Pumpe bei abgestelltem Verbrennungsmotor die Pumpe nur über den zuvor festgestellten Zeitraum zu betreiben, der zur Entleerung der Flüssigkeitsfalle erforderlich ist. Auch dadurch kann der Energieverbrauch im Stillstand verringert werden.

Eine andere vorteilhafte Ausgestaltung der Erfindung sieht vor, vorab festzustellen, wie schnell sich die Flüssigkeitsfalle bei verschiedenen Füllständen im Kraftstofftank bzw. verschiedenen Querneigungswinkeln füllt, und die Pumpe in Abhängigkeit vom jeweiligen Füllstand im Kraftstofftank bzw. Neigungswinkel in periodischen Zeitabständen zu aktivieren, die etwa den zuvor festgestellten Zeiträumen entsprechen, in denen sich die Flüssigkeitsfalle mit Kraftstoff füllt.

Alternativ ist es aber auch denkbar, die Pumpe nur bei Bedarf zu aktivieren, zum Beispiel beim Einschalten der Zündung oder wenn eine Betankung des Fahrzeugs nicht möglich ist.

Bei der Pumpe kann es sich vorteilhaft um eine Saugstrahlpumpe handeln, die Kraftstoff durch eine unterhalb von einem Auslass an der Unterseite der Flüssigkeitsfalle vorbei führende Leitung pumpt und dadurch Flüssigkeit aus der Flüssigkeitsfalle saugt.

Im Folgenden wird die Erfindung anhand von zwei in der Zeichnung dargestellten Ausführungsbeispielen näher erläutert.
Fig. 1 zeigt eine schematische Querschnittsansicht von Teilen einer erfindungsgemäßen Kraftstoffanlage eines in Schräglage abgestellten Kraftfahrzeugs;
Fig. 2 zeigt eine Ansicht entsprechend Fig. 1, jedoch von einer modifizierten nicht erfindungsgemäßen Kraftstoffanlage;
Fig. 3 zeigt ein schematisches Ablaufdiagramm von Schritten vor einer Aktivierung einer Saugstrahlpumpe einer Flüssigkeitsfalle der Kraftstoffanlage bei abgestelltem Kraftfahrzeug;
Fig. 4 zeigt eine Darstellung des Füllstands der Flüssigkeitsfalle während der Abstellphase.

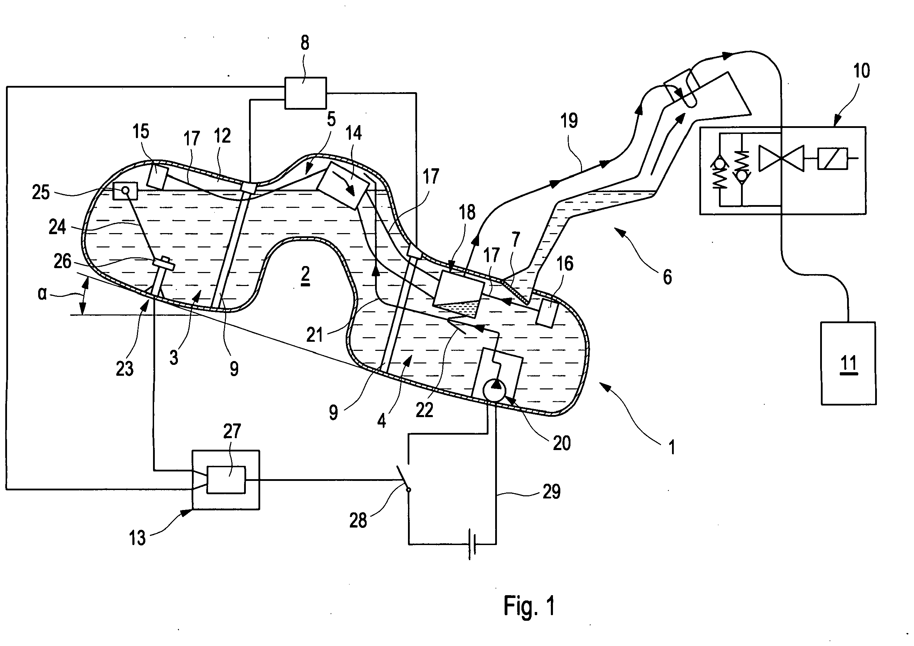

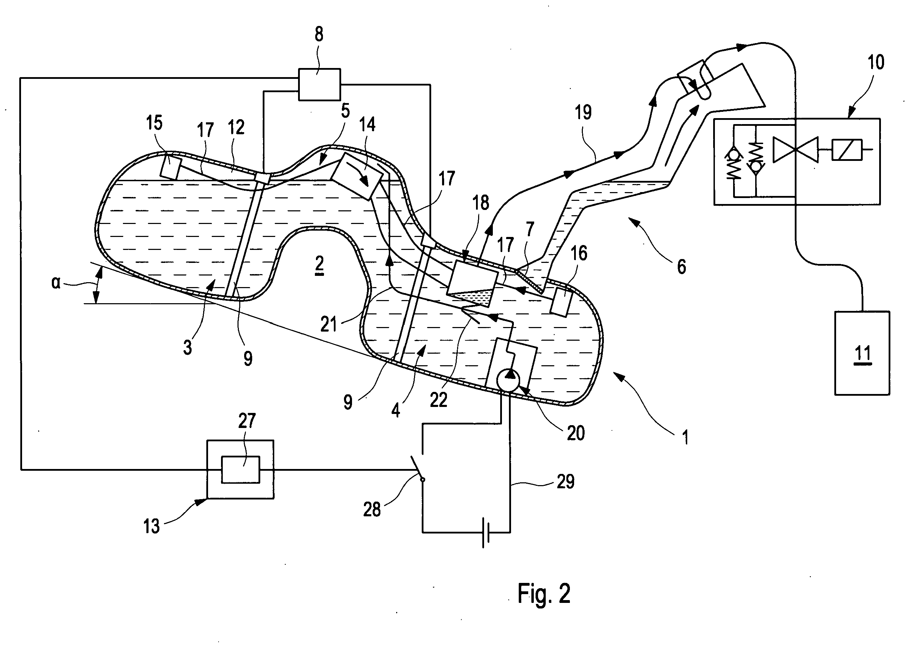

Die in Fig. 1 und 2 nur teilweise dargestellte Kraftstoffanlage ist für ein Kraftfahrzeug mit Hybrid-Antrieb bestimmt, das wahlweise mittels eines Verbrennungsmotors und mittels eines Elektromotors angetrieben werden kann.

Die Kraftstoffanlage umfasst einen druckdichten Kraftstofftank 1 mit zwei beiderseits eines Mitteltunnels 2 des Kraftfahrzeugs angeordneten Hälften 3, 4, die durch einen oberhalb des Mitteltunnels 2 angeordneten Verbindungsteil 5 miteinander verbunden sind.

Zum Betanken besitzt der Kraftstofftank 1 einen verschließbaren Einfüllstutzen 6, der am unteren Ende mit einer Klappe 7 versehen ist. Die Entnahme des Kraftstoffs aus dem Tank 1 erfolgt mittels einer Kraftstoffpumpe (nicht dargestellt), die den Kraftstoff zum Verbrennungsmotor fördert. Eine zur Erfassung des Füllstands des flüssigen Kraftstoffs im Tank 1 dienende Füllstandserfassungseinrichtung 8 umfasst mehrere im Tank 1 verteilte kapazitive Füllstandsmesser 9 und berechnet aus den Messwerten aller Füllstandsmesser 9 den Füllstand des flüssigen Kraftstoffs, der zu einer Füllstandsanzeige auf der Instrumententafel des Kraftfahrzeugs weitergeleitet wird.

Der Kraftstofftank 1 ist mit einer Tankentlüftungseinrichtung ausgestattet, die beim Betanken des Kraftfahrzeugs sowie bei einem Anstieg der Umgebungstemperatur eine Entlüftung des Kraftstofftanks 1 gestattet.

Außerhalb des Tanks 1 umfasst die Tankentlüftungseinrichtung ein Tankabsperrventil 10 und einen mit diesem verbundenen Aktivkohlefilter 11. Das Tankabsperrventil 10 ist normalerweise geschlossen und wird während des Betankens des Kraftfahrzeugs geöffnet, um das beim Betanken vom Kraftstoff verdrängte Gasgemisch aus einem Gas- oder Kopfraum 12 des Kraftstofftanks 1 abzuführen. Außerdem wird das Tankabsperrventil 10 im Betrieb des Verbrennungsmotors unter der Steuerung von dessen Motorsteuergerät 13 geöffnet, wenn der Druck im Tank 1 zum Beispiel infolge eines Temperaturanstiegs einen einstellbaren Überdruck-Schwellenwert übersteigt oder infolge eines Temperaturabfalls einen einstellbaren Unterdruck-Schwellenwert unterschreitet, um dadurch eine übermäßige Beanspruchung des Kraftstofftanks 1 zu vermeiden.

Der Aktivkohlefilter 11 verhindert, dass bei der Entlüftung des Kraftstofftanks 1 flüchtige Kohlenwasserstoffe (HC) aus dem Gasgemisch in die Umgebung gelangen und enthält zu diesem Zweck eine Füllung aus Aktivkohle, welche die flüchtigen Kohlenwasserstoffe (HC) absorbiert. Der Aktivkohlefilter 11 wird regeneriert, indem Umgebungsluft durch den Aktivkohlefilter 11 hindurch in einen Ansaugtrakt des Verbrennungsmotors angesaugt wird, um den Filter 11 zu spülen und die flüchtigen Kohlenwasserstoffe in den Brennräumen des Verbrennungsmotors zu verbrennen.

Innerhalb des Tanks 1 umfasst die Tankentlüftungseinrichtung mehrere, im Gas- oder Kopfraum 12 verteilte Tankentlüftungsventile 14, 15, 16, von denen ein zentrales Entlüftungsventil 14 oberhalb des Mitteltunnels 2 im Verbindungsteil 5 und jeweils ein seitliches Entlüftungsventil 15, 16 in jeder Hälfte 3, 4 des Kraftstofftanks 1 angeordnet ist. Die Ventile 14, 15, 16 sind durch interne Entlüftungsleitungen 17 miteinander bzw. mit einer Flüssigkeitsfalle 18 verbunden, die in der Entlüftungsleitung 17 zwischen dem zentralen Entlüftungsventil 14 und dem zum Einfüllstutzen 6 benachbarten seitlichen Entlüftungsventil 16 nahe der Oberseite des Tanks 1 im Tankinneren angeordnet und durch eine aus dem Tank 1 herausgeführte Entlüftungsleitung 19 mit dem Tankabsperrventil 10 bzw. durch dieses mit dem Aktivkohlefilter 11 verbunden ist.

Die Flüssigkeitsfalle 18 bildet einen Flüssigkeitsabscheider, der bei geöffnetem Tankabsperrventil 10 verhindert, dass von den ausströmenden Kraftstoffdämpfen flüssiger Kraftstoff zum Aktivkohlefilter 11 mitgeführt wird. Der untere Teil der Flüssigkeitsfalle 18 bildet einen Kraftstoffsammelbehälter, in dem sich der abgeschiedene flüssige Kraftstoff sammelt. Da der Aufbau und die Funktion derartiger Flüssigkeitsfallen 18 bekannt ist, erfolgt hier ansonsten keine nähere Beschreibung.

Die Entleerung der Flüssigkeitsfalle 18 bzw. von deren Kraftstoffsammelbehälter erfolgt mit Hilfe einer im Tank 1 untergebrachten Saugstrahlpumpe 20, die im Betrieb Kraftstoff durch eine unterhalb der Flüssigkeitsfalle 18 vorbei führende Leitung 21 pumpt. Die Leitung 21 mündet ganz oben in den Gas- oder Kopfraum 12, um im Stillstand der Saugstrahlpumpe 20 ein Zurückströmen von Kraftstoff in die Flüssigkeitsfalle 18 zu verhindern, und enthält eine Venturidüse 22, deren Ringspalt mit einer Öffnung an der Unterseite des Kraftstoffsammelbehälters der Flüssigkeitsfalle 18 verbunden ist. Durch die Beschleunigung des durch die Leitung 21 gepumpten Kraftstoffs wird in der Venturidüse Kraftstoff aus der Flüssigkeitsfalle 18 abgesaugt und durch die Leitung 21 in den Tank 1 zurückgeführt.

Wenn das Kraftfahrzeug mit vollständig gefülltem Kraftstofftank 1 längere Zeit unter einem größeren Neigungswinkel abgestellt wird, taucht jedoch ein Teil der Tankentlüftungsventile 14, 15, 16 ganz oder teilweise in den flüssigen Kraftstoff ein, wie in Fig. 1 und 2 für das rechte und das zentrale Tankentlüftungsventil 16 bzw. 14 dargestellt. Da Tankentlüftungsventile häufig Undichtigkeiten aufweisen, können sie sich beim Eintauchen mit Kraftstoff füllen, der dann durch die zur Flüssigkeitsfalle 18 führende Entlüftungsleitung 17 in die Flüssigkeitsfalle 18 strömt, sofern diese sich auf einem tieferen Niveau befindet. Da eine mit flüssigem Kraftstoff gefüllte Flüssigkeitsfalle 18 eine Betankung des Kraftfahrzeugs verhindert, wird die Flüssigkeitsfalle 18 auch im Stillstand des Kraftfahrzeugs mittels der Saugstrahlpumpe 20 entleert, die zu diesem Zweck einen elektrischen Antriebsmotor aufweist.

Damit die Entleerung der Flüssigkeitsfalle 18 im Stillstand des Kraftfahrzeugs mit möglichst geringem Energieverbrauch möglich ist, ist der Kraftstofftank 1 mit Einrichtungen zur Erfassung seines Neigungswinkels versehen. Diese Einrichtungen umfassen einen Hebelgeber 23, wie in Fig. 1 dargestellt, der einen schwenkbaren Hebelarm 24 und einen am freien Ende des Hebelarms 24 angebrachten Schwimmer 25 umfasst und den Neigungswinkel des Hebelarms 24 in Bezug zu einer am Boden des Kraftstofftanks 1 angebrachten Halterung 26 erfasst. Da sich der Neigungswinkel des Hebelarms 24 mit dem Querneigungswinkel α des Kraftstofftanks 1 sowie mit dem Füllstand des Kraftstoffs im Tank 1 verändert, kann umgekehrt der Querneigungswinkel α aus dem vom Hebelgeber 23 erfassten Neigungswinkel des Hebelarms 24 und dem von der Füllstandserfassungseinrichtung 8 erfassten Füllstand im Kraftstofftank 1 berechnet werden.

Bei der Kraftstoffanlage in Fig. 2 wird nicht erfindungsgemäß der Querneigungswinkel α des abgestellten Kraftfahrzeugs aus den Differenzen der Messwerte der einzelnen Füllstandsmesser 9 errechnet und ebenso wie bei der Kraftstoffanlage in Fig. 1 an eine CPU 27 im Motorsteuergerät 13 übermittelt. Gleichzeitig wird der unter Berücksichtigung der Messwerte sämtlicher Füllstandsmesser 9 von der Füllstandserfassungseinrichtung 8 berechnete Füllstand an die CPU übermittelt, wo der jeweils zuletzt übermittelte Neigungswinkel und Füllstand gespeichert werden. Die Übermittlung des Neigungswinkels erfolgt in sehr kurzen Zeitabständen von wenigen Sekunden, während die Übermittlung des Füllstandes in größeren Zeitabständen erfolgen kann. Wenn das Kraftfahrzeug in Schräglage abgestellt wird, werden auf diese Weise der aktuelle Füllstand im Kraftstofftank 1 und der Neigungswinkel des Kraftstofftanks 1 des abgestellten Kraftfahrzeugs gespeichert.

Wie in Fig. 1 und 2 dargestellt, steuert die CPU 27 einen Schalter 28 in einem Stromkreis 29, mit dem der elektrische Antriebsmotor der Saugstrahlpumpe 20 zum Aktivieren derselben eingeschaltet werden kann.

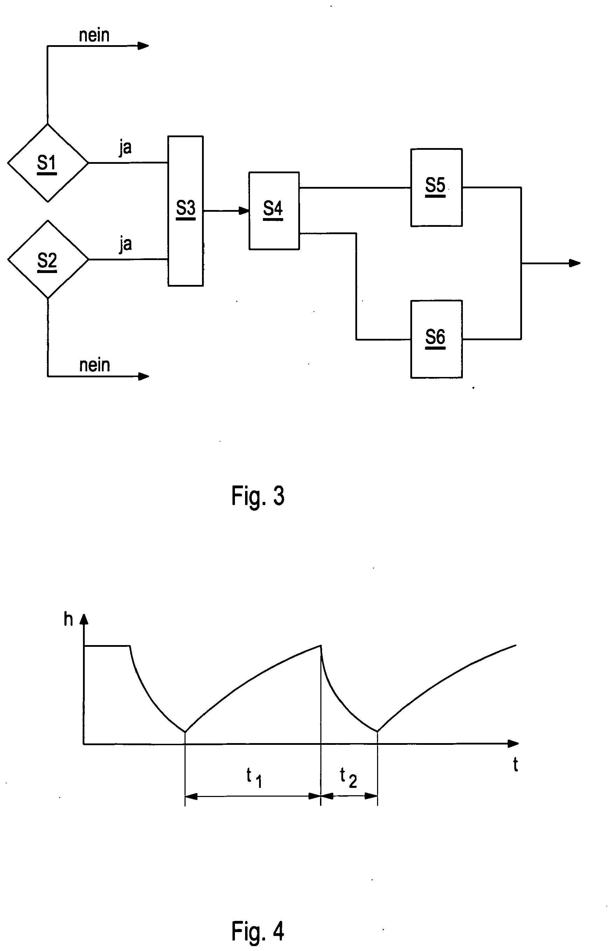

Wie in Fig. 3 dargestellt, prüft die CPU 27 beim Abstellen des Kraftfahrzeugs bzw. des Verbrennungsmotors in einem ersten und zweiten Schritt S1 und S2, ob der gespeicherte Füllstand und der gespeicherte Neigungswinkel einen jeweiligen kritischen Wert übersteigen. Wenn der Füllstand und der Neigungswinkel den jeweiligen kritischen Wert übersteigen, von denen der letztere bei einer Limousine etwa 15 Grad und bei einem Geländewagen etwa 25 Grad beträgt, wird in einem dritten Schritt S3 aus dem gespeicherte Füllstand und Neigungswinkel die maximale Menge an Kraftstoff berechnet, die sich im Fall von Leckagen der Entlüftungsventile 14, 15, 16 in einem vorbestimmten Zeitraum in der Flüssigkeitsfalle 18 ansammeln kann, mit anderen Worten der Füllstand im Kraftstoffsammelbehälter der Flüssigkeitsfalle 18.

Aus dieser Kraftstoffmenge wird in einem vierten Schritt S4 unter Berücksichtigung der Förderleistung der Saugstrahlpumpe 20 die Zeitspanne berechnet, die notwendig ist, um die gefüllte Flüssigkeitsfalle 18 mittels der Saugstrahlpumpe 20 zu entleeren.

Diese Zeitspanne wird gespeichert und dient zur Ansteuerung des Schalters 28, der bei jeder Aktivierung der Saugstrahlpumpe 20 im Stillstand des Kraftfahrzeugs nie länger als über die gespeicherte Zeitspanne geschlossen wird, um dadurch den Energieverbrauch der Saugstrahlpumpe 20 zu minimieren.

Die Aktivierung der Saugstrahlpumpe 20 im Stillstand des Kraftfahrzeugs durch Schließen des Schalters 28 kann von der CPU 27 periodisch vorgenommen werden, zum Beispiel alle 24 oder 48 Stunden, wie in Fig. 3 durch den Schritt S5 angezeigt. Alternativ kann die Aktivierung jedoch auch zu vorbestimmten Zeitpunkten erfolgen, zum Beispiel beim Einschalten der Zündung des Kraftfahrzeugs oder bei einer Anfahrt im Elektrobetrieb, wie in Fig. 3 durch den Schritt S6 angezeigt.

Wenn bei den Schritten S1 und S2 festgestellt wird, dass der Füllstand und der Neigungswinkel den jeweiligen kritischen Wert nicht übersteigen, endet die Prüfung und dem Antriebsmotor der Saugstrahlpumpe 20 wird im Stillstand des Kraftfahrzeugs kein Strom zugeführt.

Fig. 4 zeigt eine nicht maßstabsgetreue Darstellung des Füllstands h im Kraftstoffsammelbehälter der Flüssigkeitsfalle 18 während einer Abstellphase des Kraftfahrzeugs, wobei während der Zeit t₁ zwischen zwei periodischen Aktivierungen der Saugstrahlpumpe 18 Kraftstoff in die Flüssigkeitsfalle 18 eindringt, der dann während der Zeit t₂, zum Beispiel etwa 20 Sekunden lang, durch Schließen des Schalters 28 und Aktivierung der Saugstrahlpumpe 20 aus der Flüssigkeitsfalle 18 abgesaugt wird.

## Patentansprüche

1. Kraftstoffanlage für ein Kraftfahrzeug, mit einem Kraftstofftank (1), Einrichtungen (8) zur Erfassung des Füllstands des flüssigen Kraftstoffs im Kraftstofftank (1) und Entlüftungseinrichtungen (10, 11, 14, 15, 16, 17, 18, 19), die mindestens ein Entlüftungsventil (14, 15, 16), eine innerhalb des Kraftstofftanks (1) angeordnete und mit dem Entlüftungsventil (14, 15, 16) verbundene Flüssigkeitsfalle (18) zur Abscheidung von flüssigem Kraftstoff, sowie eine Pumpe (20) zum Entleeren der Flüssigkeitsfalle (18) umfassen, und wobei Einrichtungen (23, 9) zur Erfassung eines Neigungswinkels (α) des Kraftstofftanks (1) sowie Einrichtungen (27) zum Aktivieren der Pumpe (20) in Abhängigkeit vom Füllstand des flüssigen Kraftstoffs im Kraftstofftank (1) und vom Neigungswinkel (α) des Kraftstofftanks (1) vorgesehen sind, **dadurch gekennzeichnet, dass** die Einrichtungen (23,9) einen Hebelgeber (23) umfassen, der einen schwenkbaren Hebelarm (24) und einen am freien Ende des Hebelarms (24) angebrachten Schwimmer (25) umfasst und den Neigungswinkel des Hebelarms (24) in Bezug zu einer am Boden des Kraftstofftanks (1) angebrachten Halterung (26) erfasst, wobei der Querneigungswinkel (α) des Kraftstofftanks aus dem von dem Hebelgeber (23) erfassten Neigungswinkel des Hebelarms (24) und dem von einer Füllstandserfassungseinrichtung (8) erfassten Füllstand im Kraftstofftank (1) berechnet wird.

2. Kraftstoffanlage nach Anspruch 1, **dadurch gekennzeichnet, dass** die Einrichtungen (23, 9) zur Erfassung des Neigungswinkels (α) des Kraftstofftanks (1) mindestens zwei im Abstand voneinander angeordnete Füllstandsmesser (9) der Einrichtungen (8) zur Erfassung des Füllstands des Kraftstoffs im Kraftstofftank (1) umfassen.

3. Kraftstoffanlage nach einem der vorangehenden Ansprüche, **dadurch gekennzeichnet, dass** die Einrichtungen (27) den Füllstand im Kraftstofftank (1) und den Neigungswinkel des Kraftstofftanks (1) während des Betriebs des Kraftfahrzeugs in periodischen Zeitabständen speichern und jeweils den zuletzt gespeicherten Wert auswerten.

4. Kraftstoffanlage nach einem der vorangehenden Ansprüche, **dadurch gekennzeichnet, dass** die Einrichtungen (27) die Pumpe (20) aktivieren, wenn bei abgestelltem Kraftfahrzeug der Füllstand des flüssigen Kraftstoffs im Kraftstofftank (1) und der Neigungswinkel des Kraftstofftanks (1) ein kritisches Maß übersteigen.

5. Kraftstoffanlage nach einem der vorangehenden Ansprüche, **dadurch gekennzeichnet, dass** die Einrichtungen (27) die Pumpe (20) nur über eine Zeitspanne aktivieren, die zum Entleeren der Flüssigkeitsfalle (18) ausreichend ist.

6. Kraftstoffanlage nach einem der vorangehenden Ansprüche, **dadurch gekennzeichnet, dass** die Einrichtungen (27) die Pumpe (20) in periodischen Zeitabständen aktivieren.

7. Kraftstoffanlage nach einem der vorangehenden Ansprüche, **dadurch gekennzeichnet, dass** die Einrichtungen (27) die Pumpe (20) aktivieren, wenn das als Hybridfahrzeug ausgebildete Kraftfahrzeug im Elektrobetrieb angefahren wird.

8. Kraftstoffanlage nach einem der vorangehenden Ansprüche, **dadurch gekennzeichnet, dass** die Pumpe (20) einen elektrischen Antriebsmotor aufweist.

## Claims

1. Fuel system for a motor vehicle, having a fuel tank (1), devices (8) for detecting the filling level of the liquid fuel in the fuel tank (1) and ventilation devices (10, 11, 14, 15, 16, 17, 18, 19) which comprise at least one ventilation valve (14, 15, 16), a liquid trap (18) which is arranged inside the fuel tank (1) and which is connected to the ventilation valve (14, 15, 16) for separating liquid fuel, and a pump (20) for emptying the liquid trap (18), and wherein devices (23, 9) for detecting an inclination angle (α) of the fuel tank (1) and devices (27) for activating the pump (20) in accordance with the filling level of the liquid fuel in the fuel tank (1) and the inclination angle (α) of the fuel tank (1) are provided, **characterised in that** the devices (23, 9) comprise a lever sensor (23) which comprises a pivotable lever arm (24) and a float (25) which is fitted to the free end of the lever arm (24) and which detects the inclination angle of the lever arm (24) with reference to a retention member (26) which is fitted to the base of the fuel tank (1), wherein the transverse inclination angle (α) of the fuel tank is calculated from the inclination angle of the lever arm (24) detected by the lever sensor (23) and the filling level in the fuel tank (1) detected by a filling level detection device (8).

2. Fuel system according to claim 1, **characterised in that** the devices (23, 9) for detecting the inclination angle (α) of the fuel tank (1) comprise at least two spaced-apart filling level measuring units (9) of the devices (8) for detecting the filling level of the fuel in the fuel tank (1).

3. Fuel system according to either of the preceding claims, **characterised in that** the devices (27) store the filling level in the fuel tank (1) and the inclination angle of the fuel tank (1) during operation of the motor vehicle at periodic time intervals and evaluate the last value stored in each case.

4. Fuel tank according to any one of the preceding claims, **characterised in that** the devices (27) activate the pump (20) if, when the motor vehicle is switched off, the filling level of the liquid fuel in the fuel tank (1) and the inclination angle of the fuel tank (1) exceed a critical level.

5. Fuel system according to any one of the preceding claims, **characterised in that** the devices (27) activate the pump (20) only for a period of time which is sufficient to empty the liquid trap (18).

6. Fuel system according to any one of the preceding claims, **characterised in that** the devices (27) activate the pump (20) at periodic time intervals.

7. Fuel system according to any one of the preceding claims, **characterised in that** the devices (27) activate the pump (20) when the motor vehicle which is constructed as a hybrid vehicle is started in electric operation.

8. Fuel system according to any one of the preceding claims, **characterised in that** the pump (20) has an electric drive motor.

## Revendications

1. Système d'alimentation en carburant pour un véhicule automobile, avec un réservoir de carburant (1), avec des dispositifs (8) destinés à détecter le niveau du carburant liquide dans le réservoir de carburant (1) et avec des dispositifs de purge d'air (10, 11, 14, 15, 16, 17, 18, 19) qui comprennent au moins une soupape de purge d'air (14, 15, 16), un piège à liquide (18), agencé à l'intérieur du réservoir de carburant (1), relié à la soupape de purge d'air (14, 15, 16) et destiné à séparer du carburant liquide, ainsi qu'une pompe (20) destinée à vider le piège à liquide (18),
dans lequel il est prévu des dispositifs (23, 9) destinés à détecter un angle d'inclinaison (α) du réservoir de carburant (1) ainsi que des dispositifs (27) destinés à activer la pompe (20) en fonction du niveau du carburant liquide dans le réservoir de carburant (1) et de l'angle d'inclinaison (α) du réservoir de carburant (1),
**caractérisé en ce que** les dispositifs (23, 9) comprennent un capteur de levier (23) qui comprend un bras de levier (24) pivotant et un flotteur (25) agencé sur l'extrémité libre du bras de levier (24) et qui détecte l'angle d'inclinaison du bras de levier (24) par rapport à une fixation (26) agencée au fond du réservoir de carburant (1),
dans lequel l'angle d'inclinaison transversale (α) du réservoir de carburant est calculé à partir de l'angle d'inclinaison du bras de levier (24) qui a été détecté par le capteur de levier (23) et à partir du niveau de remplissage du réservoir de carburant (1) qui a été détecté par un dispositif de détection de niveau de remplissage (8).

2. Système d'alimentation en carburant selon la revendication 1, **caractérisé en ce que** les dispositifs (23, 9) destinés à détecter l'angle d'inclinaison (α) du réservoir de carburant (1) comprennent au moins deux dispositifs de mesure de niveau (9), agencés à distance l'un de l'autre, des dispositifs (8) destinés à détecter le niveau de carburant dans le réservoir de carburant (1).

3. Système d'alimentation en carburant selon l'une quelconque des revendications précédentes, **caractérisé en ce que** les dispositifs (27) mémorisent le niveau de remplissage du réservoir de carburant (1) et l'angle d'inclinaison du réservoir de carburant (1) pendant le fonctionnement du véhicule automobile à des intervalles de temps périodiques et évaluent à chaque fois la dernière valeur mémorisée.

4. Système d'alimentation en carburant selon l'une quelconque des revendications précédentes, **caractérisé en ce que** les dispositifs (27) activent la pompe (20) si, lorsque le véhicule automobile est arrêté, le niveau du carburant liquide dans le réservoir de carburant (1) et l'angle d'inclinaison du réservoir de carburant (1) dépassent une mesure critique.

5. Système d'alimentation en carburant selon l'une quelconque des revendications précédentes, **caractérisé en ce que** les dispositifs (27) activent la pompe (20) seulement pendant un laps de temps qui suffit à vider le piège à liquide (18).

6. Système d'alimentation en carburant selon l'une quelconque des revendications précédentes, **caractérisé en ce que** les dispositifs (27) activent la pompe (20) à des intervalles de temps périodiques.

7. Système d'alimentation en carburant selon l'une quelconque des revendications précédentes, **caractérisé en ce que** les dispositifs (27) activent la pompe (20) lorsque le véhicule automobile conçu comme un véhicule hybride démarre en mode électrique.

8. Système d'alimentation en carburant selon l'une quelconque des revendications précédentes, **caractérisé en ce que** la pompe (20) comporte un moteur d'entraînement électrique.
